# EUROPÄISCHE PATENTANMELDUNG

(11) **EP 2 418 583 A1**
(43) Veröffentlichungstag der Anmeldung: **15.02.2012**
(21) Anmeldenummer: 10172279.1
(22) Anmeldetag: 09.08.2010
(51) Int. Cl.: G06F 11/36, G05B 19/00

(54) **Prüfeinrichtung für einen Programmteil einer industriellen Automatisierungsanordnung**

(71) Anmelder: Siemens Aktiengesellschaft, 80333 München (DE)
(72) Erfinder: Zeh, Alexander, 91717, Wassertrüdingen (DE)

(57) **Zusammenfassung**

Die Erfindung betrifft eine Prüfeinrichtung für einen Funktionsbaustein und/oder einen Programmteil einer industriellen Automatisierungsanordnung. Dabei weist die Prüfeinrichtung eine Logik zur Berechnung oder Ausführung eines durch den Funktionsbaustein oder den Programmteil definierten Programmcodes auf, wobei die Prüfeinrichtung zur Bereitstellung von in dem Funktionsbaustein oder dem Programmteil verwendeten Startwerten und/oder zur Simulation von in dem Funktionsbaustein oder dem Programmteil verwendeten Eingangsschnittstellen eingerichtet ist, und wobei die Prüfeinrichtung zur Auswertung von durch den Funktionsbaustein oder durch den Programmteil bei der Ausführung errechneten Werte und/oder Ausgangsschnittstellen ausgebildet ist. Durch eine solche Prüfeinrichtung können auch allein nicht ablauffähige Funktionsbausteine, Programmteile, Netzwerke etc. zur Ausführung gebracht und überprüft werden.

## Beschreibung

Die Erfindung betrifft eine Prüfeinrichtung für einen Programmteil einer industriellen Automatisierungsanordnung gemäß dem Oberbegriff des Patentanspruchs 1.

Programme für industrielle Automatisierungsanordnungen und Automatisierungseinrichtungen, beispielsweise für sogenannte "PLC*'* s" (PLC = Programm Logic Controller), werden meist in einem Editor in einer Programmiersprache gemäß der Norm IEC 61131 geschrieben; in der Regel handelt es sich dabei um Funktionsblöcke oder Funktionsbausteine, die graphisch miteinander "verschaltet" werden. Diese Funktionsblöcke oder Funktionsbausteine können wiederum logische Verschaltungen, sogenannte "Netzwerke", enthalten. Im Weiteren wird der Begriff "Programmteil" stellvertretend für Funktionsbausteine, Gruppen von Funktionsbausteinen oder die sog. Netzwerke im Sinne logischer Verschaltungen von Signalen verwendet. Diese Programmteile, insbesondere die Funktionsbausteine und Funktionsblöcke, können auch zu größeren Funktionsblöcken verschaltet werden.

Alternativ zu der "graphischen" Programmierung mit Blöcken kommen auch textbasierte Programmierverfahren o.ä. zum Einsatz; auch diese werden letztlich zu einem ausführbaren Programmcode compiliert oder - in Ausnahmefällen - durch einen sogenannten "Interpreter" ausgeführt. Die im Folgenden betrachteten Funktionsbausteine und Programmteile sind - unabhängig von der Sprache, in der sie verfasst sind - als "unselbstständige" Teile eines Gesamtprogramms anzusehen.

Unverzichtbarer Bestandteil des Arbeitsablaufs während des Programmierens und auch nach der Fertigstellung eines kompletten Programms ist der Funktionstest. Dazu wird das zu testende Programm entweder in eine reale Automatisierungseinrichtung ("Steuerung", "CPU", "PLC", ...) geladen und dort ausgeführt, oder aber es wird eine Simulationsumgebung verwendet, welche eine Laufzeitumgebung zur Verfügung stellt, die funktionsgleich zu dieser realen Steuerung ist. Nachteilig ist dabei, dass sowohl mit einer realen Steuerung als auch mit der Simulationsumgebung nur vollständige Programme zum Ablauf gebracht werden können, d.h., dass der zu prüfende Funktionsbaustein oder der zur prüfende Programmteil in sich konsistent und compilierbar sein muss. Da einzelne Funktionsbausteine und Programmteile regelmäßig sowohl auf Eingangsund Ausgangs-Peripherie ("Eingangssignale", "Ausgangssignale"), als auch auf Variablen, die in anderen (ggf. noch nicht existenten) Funktionsbausteinen verwendet werden, zugreifen, ist die Prüfung einzelner Funktionsbausteine und Pogrammteile oft nur eingeschränkt oder überhaupt nicht möglich. Dies widerspricht jedoch der Erwartungshaltung, das ein Anwender schon während der Programmierung ("Engineering") das Verhalten eines Netzwerkes, eines Funktionsbausteines o.ä. prüfen und zeitnah die Auswirkungen von Programmänderungen beobachten möchte.

Oft wird dieses Problem dadurch umgangen, dass ein Programmierer ein einfaches Hauptprogramm verfasst, welches die für den zu prüfenden Funktionsbaustein verwendeten Variablen, Eingänge, Ausgänge, etc. definiert und welches Manipulationsmittel für die verwendeten Variablen und Eingänge umfasst und außerdem noch Visualisierungsmittel für die zu beobachtenden Variablen, Werte und Ausgangsschnitten aufweist.

Diese Vorgehensweise hat jedoch den Nachteil, dass nach wie vor eine Simulationsumgebung oder eine reale Steuerung benötigt wird, und weiterhin den Nachteil, dass der Aufwand für die Erstellung eines "Programmgerüsts" für die Einbindung des zu prüfenden Funktionsbausteins oder Programmteils aufwendig ist. Außerdem kann ein solches Programmgerüst nur selten für die Prüfung anderer Funktionsbausteine o.ä. verwendet werden, bzw. es sind dafür oft sehr umfangsreiche und aufwendige Änderungen notwendig.

Ein weiteres Problem besteht immer dann, wenn ein einzelner Funktionsbaustein oder einzelne Programmteile eines bestehenden Automatisierungsprogramms erneuert oder ausgetauscht werden soll (sogenannter "Update"). In solchen Fällen ist es meist notwendig, das resultierende komplette Programm erneut zu überprüfen, was je nach Komplexität des Gesamtprogramms einen nicht unerheblichen Aufwand darstellt.

Es ist also eine Aufgabe der vorliegenden Erfindung, eine Einrichtung vorzuschlagen, mit der die Prüfung von Funktionsbausteinen, einzelnen Netzwerken, Programmteilen o.ä. für industrielle Automatisierungseinrichtungen auf einfache Weise vorgenommen werden kann.

Es ist ein wesentlicher Gedanke der erfindungsgemäßen Lösung der Aufgabe, dass eine Entwicklungsumgebung oder eine zu programmierende Automatisierungseinrichtung mit einer Prüfeinrichtung versehen wird, in der ein "unvollständiger" bzw. nicht allein ablauffähiger Funktionsbaustein oder ein solcher Programmteil bzw. der daraus resultierende Programmcode (Object-Code) zur Ausführung gebracht werden kann. Dabei ist erfindungsgemäß vorgesehen, dass die von dem Funktionsbaustein oder Programmteil verwendeten Variablen und Eingangsschnittstellen durch die Prüfeinrichtung automatisch bereitgestellt werden, und wobei weiterhin die von dem Programmteil oder den Funktionsbaustein errechneten Werte bzw. Ausgangsschnittstellen automatisch ausgewertet, beispielsweise visualisiert, werden. Dabei werden in einer bevorzugten Ausführungsform der Erfindung einem Benutzer beim Anlegen eines neuen sogenannten "Testfalls"eine Tabelle der Schnittstellen des Funktionsbausteins bzw. Programmteils, sowie der sogenannten "Tags" (z.B. Variablen) angeboten. Hier können Eingangs- und Ausgangssituationen für das Verhalten des Funktionsbausteins, des Netzwerks oder Programmteils eingetragen werden. Nach der Implementierung oder Änderung des Funktionsbausteins oder Programmteils können damit Tests ausgeführt werden, wobei Abweichungen von einem erwarteten bzw. spezifizierten Verhalten sichtbar werden. Dabei können Eingangs- und erwarteten Ausgangswerte auch in Beschreibungsdateien (beispielsweise Tabellen) festgelegt werden, so dass eine solche Prüfung auch automatisch und auch seitens einer bestehenden Automatisierungseinrichtung (beispielsweise beim "Update" ines Funktionsbausteins) durchgeführt werden können.

Die Lösung der Aufgabe sieht insbesondere eine Prüfeinrichtung für einen Funktionsbaustein und/oder einen Programmteil einer industriellen Automatisierungsanordnung vor. Dabei berechnet die Prüfeinrichtung das Verhalten des zu prüfenden Funktionsbausteins oder des Programmteils, wobei die Prüfeinrichtung eine Schnittstelle zur manuellen oder automatischen Bereitstellung der in dem Funktionsbaustein oder dem Programmteil verwendeten Startwerten und/oder zur Simulation von in dem Funktionsbaustein oder dem Programmteil verwendeten Eingangsschnittstellen zur Verfügung stellt, und wobei die Prüfeinrichtung zur Auswertung von durch den Funktionsbaustein oder durch den Programmteil bei der Ausführung errechneten Werte und/oder Ausgangsschnittstellen ausgebildet ist. Durch eine solche Prüfeinrichtung können auch solche Funktionsbausteine und Programmteile bzw. Netzwerke geprüft werden, die für sich genommen kein ablauffähiges, komplettes Programm darstellen.

Vorteilhafte Ausgestaltungen der erfindungsgemäßen Prüfeinrichtung sind in den abhängigen Patentansprüchen angegeben.

Vorteilhaft umfasst die Auswertung eine Visualisierung zumindest eines Teils der errechneten Werte und/oder zumindest eines Teils der Zustände der von dem Funktionsbaustein und/oder dem Programmteil betroffenen Ausgangsschnittstellen. Dadurch kann ein Anwender während der Implementierung eines Programmbausteins o.ä. direkt in eine sogenannte "virtuelle Onlinesicht" schalten und in einer vorteilhaften Ausgestaltung auch die Baustein-Schnittstellen direkt "bedienen". Dabei wird das Verhalten des Funktionsbausteins bzw. des Programmteils hardwareneutral errechnet oder simuliert.

Dabei ist wesentlich, dass hierbei alternativ zur Compilierung und Abarbeitung des tatsächlichen Programmcodes erfindungsgemäß auch eine Berechnung des logischen Verhaltens des Programmteils vorgenommen werden kann, so dass in vielen Fällen eine Compilierung des Programmteils überhaupt nicht notwendig ist. Damit erübrigt es sich auch, eine komplette Laufzeitumgebung für den zu prüfenden Programmteil bereitzustellen.

Vorteilhaft können die Vorgaben für die Startwerte und/oder für die zu Beginn der Prüfung zu simulierenden Zustände der Eingangsschnittstellen durch einen Benutzer oder Anwender eingestellt werden. In einer weiteren vorteilhaften Ausgestaltung werden durch die Prüfeinrichtung zumindest die dabei nicht definierten Variablen, Werte, Schnittstellen, Verweise auf externe Daten o.ä. ("Tags", "DB*'* s", ...) initial mit sogenannten "Default-Werten" belegt. Dies gilt auch für Werte etc. sogenannter unterlagerter Bausteine, sofern sie nicht ohnehin Bestandteil des zu prüfenden Funktionsbausteins bzw. Programmteils sind. Bei der anschließenden Ausführung des zu prüfenden Funktionsbausteins o.ä. kann die Berechnung bis zum ersten nicht auflösbaren Fehler erfolgen. Sobald Randbedingungen (Eingänge, Variablen, Werte etc.) geändert werden, können die geänderten "Folgewerte" oder Resultate sofort durch eine erneute oder fortgesetzte Berechnung ermittelt, ausgewertet und ggf. dargestellt werden. In einer vorteilhaften Ausgestaltung ist auch die schrittweise Ausführung ("Stepping") des Programmcodes möglich.

In einer vorteilhaften Variante der Erfindung ist es möglich, Vorgaben für die Startwerte und/oder für die Zustände der zu simulierenden Eingangsschnittstellen durch eine Datei oder Tabelle für die Prüfeinrichtung bereitzustellen. Dadurch ist auch die Vordefinierung bzw. Standardisierung von sogenannten "Testfällen" möglich. Vorteilhaft kann eine solche Datei oder Tabelle auch Erwartungswerte für die Resultate der Programmausführung umfassen, wobei in einer weiteren vorteilhaften Ausgestaltung ein automatisierter Vergleich zwischen den tatsächlichen Resultaten und den erwarteten Resultaten vorgenommen werden kann.

Sofern die Prüfeinrichtung Bestandteil einer sich im "produktiven Betrieb" befindlichen industriellen Automatisierungskomponente ist bzw. durch eine solche zugegriffen werden kann, können automatisch geänderte Funktionsbausteine, die im Rahmen eines sogenannten "Updates" zu dieser Automatisierungseinrichtung übertragen werden, vor ihrer Produktiv-Schaltung hinsichtlich ihrer Funktionalität überprüft werden. Dabei kann der Einsatz eines solchen Funktionsbausteins bzw. Programmteils nur dann freigegeben werden, wenn die bezogen auf den Testfall tatsächlich errechneten Werte bzw. gesetzten Ausgangsschnittstellen mit den erwarteten Werten und Zuständen in der Datei bzw. Tabelle in hinreichender Weise übereinstimmen.

Eine weitere Variante der Erfindung besteht darin, den Test eines Funktionsbausteins bzw. eines Programmteils wiederholt automatisch durchzuführen, wobei einige oder auch alle Eingangsschnitten, Variablen, Werte etc. innerhalb vorgegebener Grenzen zufällig verändert werden, so dass geprüft werden kann, ob die in einem Funktionsbaustein bzw. Programmteil vorgesehenen Maßnahmen zur Ausnahmebehandlung funktionieren, oder nicht.

Vorteilhaft weist die Prüfeinrichtung ein sogenanntes "Scripting Interface" auf, wodurch es möglich ist, Testfälle und Testabläufe mittels einer Beschreibungssprache festzulegen und danach automatisiert bzw. wiederholt durchzuführen. Vorteilhaft ist es dabei auch möglich eine sogenannte "Log"-Datei mit Testresultaten anzulegen, die ggf. auch in der Beschreibungssprache verfasst ist und somit auch automatisch ausgewertet werden kann.

Ausführungsbeispiele einer erfindungsgemäßen Prüfeinrichtung werden nachfolgend anhand der Zeichnungen erläutert.

Dabei zeigen:
- Figur 1: in einer schematischen Darstellung ein Entwicklungssystem mit einem integrierten Editor zur Programmerstellung und einer Prüfeinrichtung zur Überprüfung eines Funktionsbausteins bzw. Programmteils,
- Figur 2: in einer schematischen Darstellung eine Anordnung aus einem Entwicklungssystem und einer Automatisierungseinrichtung, wobei die Automatisierungseinrichtung die Prüfeinrichtung für die Sperrung oder Freischaltung eines übertragenden Funktionsbausteins bzw. Programmteils umfasst,
- Figur 3: ein einfacher Funktionsbaustein, wie er in einer Entwicklungsumgebung dargestellt wird,
- Figur 4: der Funktionsbaustein aus der Figur 3 während der Prüfung mit einer ersten Konstellation der Eingangsschnittstellen,
- Figur 5: der Funktionsbaustein aus der Figur 3 in einer zweiten Start-Konfiguration,
- Figur 6: der Funktionsbaustein aus der Figur 3 nach einer weiteren Änderung einer Eingangsschnittstelle, und
- Figur 7: eine Tabelle mit Eingangsschnittstellen, Ausgangsschnittstellen, Startwerten, AusführungsResultaten und erwarteten Werten für eine automatische Prüfung eines Funktionsbausteins bzw. Programmteils.

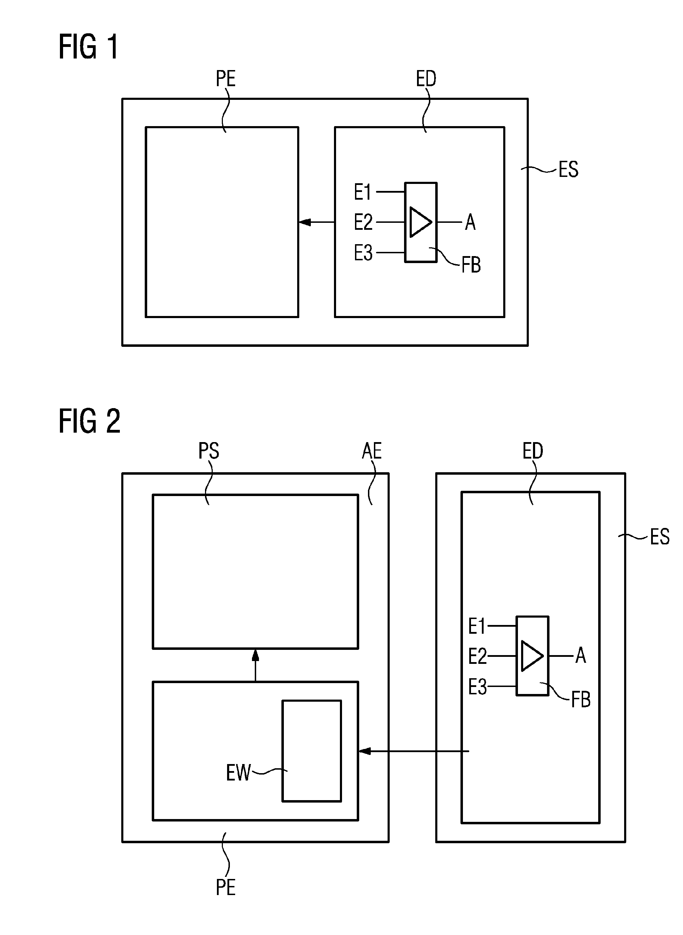

In der Figur 1 ist schematisch ein Entwicklungssystem ES ("Engineering-System") einer industriellen Automatisierungsanordnung dargestellt, die einen Editor ED mit einem dargestellten Funktionsbaustein FB umfasst. Dieser Funktionsbaustein FB weist die Eingangsschnittstellen E1, E2, E3 und die Ausgangsschnittstelle A auf. Die Eingangsschnittstellen E1, E2, E3 sind über eine logische Verschaltung ("Netzwerk") mit der Ausgangsschnittstelle A verknüpft. Das Entwicklungssystem ES weist außerdem eine Prüfeinrichtung PE (Prüflogik) auf, mit welcher der Funktionsbaustein FB oder ein anderer Programmteil aus dem Editor ED berechnet werden kann. Die Prüfeinrichtung PE ist zur Berechnung oder zur Ausführung des Funktionsbausteins FB bzw. eines daraus resultierenden Programmcodes eingerichtet. Im vorliegenden Ausführungsbeispiel wird von dem Editor ED der Funktionsbaustein FB in einer compilierten (in Maschinencode übersetzen) Form zu der Prüfeinrichtung PE übertragen; in einer alternativen Ausführungsform kann die Compilierung auch seitens der Prüfeinrichtung PE erfolgen. In einer dritten Ausführungsform kann die Prüfeinrichtung PE auch einen sogenannten "Interpreter" umfassen, der eine Ausführung des Funktionsbausteins FB ohne den Zwischenschritt der "Compilierung" ermöglicht.

Alternativ zu dem vorliegenden Ausführungsbeispiel kann die Prüfeinrichtung PE auch als eigenständige Applikation realisiert sein, die beispielsweise über eine Benutzeroberfläche des Entwicklungssystems ES aufgerufen wird.

In der Figur 2 ist eine Anordnung schematisch dargestellt, bei der das Entwicklungssystem ES über ein Datennetzwerk mit einer Automatisierungseinrichtung AE verbunden ist, wobei die Automatisierungseinrichtung AE einen Programmspeicher PS für ein komplettes ablauffähiges Programm umfasst, und wobei das ablauffähige, ausführbare Programm aus einzelnen Funktionsbausteinen besteht. Im Beispiel der Figur 2 wird der bereits aus der Figur 1 bekannte Funktionsbaustein FB für seine Prüfung an die Prüfeinrichtung PE übertragen, die diesmal jedoch auf der Automatisierungseinrichtung AE angeordnet ist. Eine Datei mit erwarteten Werten für die Ausgangsschnittstelle A und die dabei vorliegenden bzw. zu simulierenden Eingangsschnittstellen E1, E2, E3 ist dabei bereits in der Automatisierungseinrichtung AE bzw. der Prüfeinrichtung PE gespeichert.

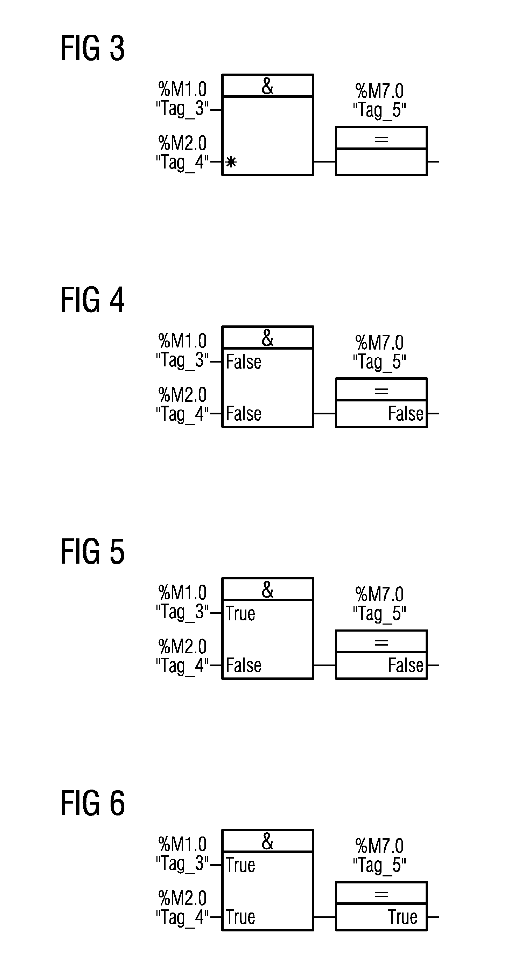

Ein Ablauf bzw. ein Ausführungsbeispiel für eine Prüfung eines Funktionsbausteins FB anhand der Anordnungen aus der Figur 1 und aus der Figur 2 wird nachfolgend anhand der Figuren 3 - 6 beschrieben, wobei die Eingangsschnitten mit den Bezeichnungen "Tag_{_}3" und "Tag_{_}4" bezeichnet sind, und wobei die Ausgangsschnittstelle mit der Bezeichnung "Tag_{_}5" versehen ist. Aus Gründen der Übersichtlichkeit ist als Funktionsbaustein ein einfaches "und"-Gatter gewählt worden, welches die Eingangsschnitten "Tag_3" und "Tag_4" durch ein logisches "and" verknüpft, so dass der Zustand des Ausgangs "Tag_5" nur dann "True" sein kann, wenn auch beide Eingangsschnittstellen "Tag_3, "Tag_4" den Wert "True" aufweisen. Die Figur 3 zeigt dabei die Ansicht des Funktionsbausteins FB im Editor ED, so dass den Eingangs- und Ausgangsschnittstellen noch keine Werte ("True", "False") zugeordnet sind. Die Figur 4 zeigt die Ansicht desselben Funktionsbausteins FB in der Prüfeinrichtung PE, wobei beide Eingangsschnittstellen "Tag_3", "Tag_4" auf "False" gesetzt sind. Nun findet eine automatische Berechnung oder alternativ eine Ausführung des Funktionsbausteins FB statt, so dass eine Berechnung des definierten Netzwerkes (Gatter "and") dazu führt, dass die Ausgangsschnittstelle "Tag_5" auf "False" gesetzt wird. Dieser Zustand wird durch das Wort "False" bei der Ausgangsschnittstelle "Tag_5" visualisiert. Anhand der Figuren 5 und 6 ist zu sehen, was passiert, wenn die Eingangsschnittstellen "Tag_3", "Tag_4" nacheinander auf den Wert "True" gesetzt werden, wobei erst bei der Situation gemäß der Figur 6 die Ausgangsschnittstelle "Tag_5" ebenfalls den Wert "True" annimmt.

Im zuvor beschriebenen Ausführungsbeispiel ist der Funktionsbaustein FB durch die Prüfeinrichtung PE in einer permanenten Schleife, also wiederholt, ausgeführt bzw. berechnet worden, so dass eine manuelle Änderung von Eingangsschnittstellen sofort anhand der Ausgangsschnittstelle beobachtet werden konnte. Alternativ (nicht dargestellt) kann jedoch auch eine Einzelausführung des Funktionsbausteins oder sogar eine Einzelschrittausführung des Programmcodes erfolgen.

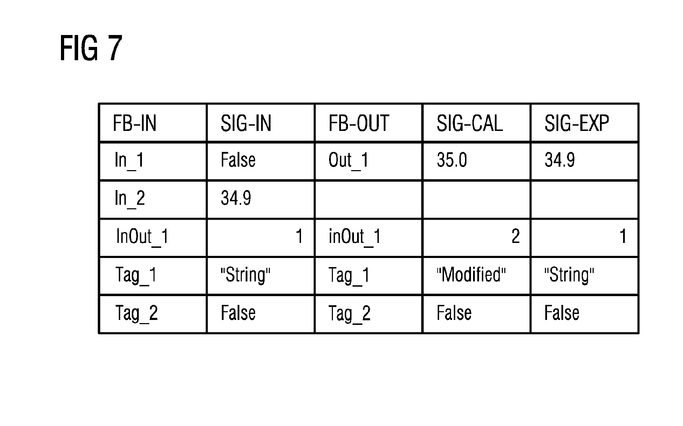

Im Folgenden wird anhand der Figur 7 beschrieben, wie ein Test-Szenario anhand einer Datei bzw. anhand einer Tabelle für die Prüfeinrichtung PE zur Verfügung gestellt werden kann. Dabei wird ein Funktionsbaustein mit fünf Eingangsschnittstellen betrachtet, die in der Spalte FB-IN gelistet sind. In der Spalte SIG-IN sind die Startwerte bzw. Eingangswerte für diese Eingangsschnittstellen angegeben, die im Rahmen der Ausführung durch die Prüfeinrichtung PE simuliert werden sollen. Hierbei wird bei den Eingangsschnittsellen FB-IN nicht zwischen tatsächlichen, physikalischen Eingangsschnittstellen ("I/O's"-Inputs/Outputs) und Variablen unterschieden, weil letztlich auch Eingangsschnittstellen in Programmen anhand von Bezeichnungen zugegriffen werden können, die datentechnisch wie Variablen behandelt werden können. Die Spalte FB-OUT bezeichnet die Ausgangsschnittstellen bzw. zu berechnenden Variablen des Funktionsbausteins; im vorliegenden Ausführungsbeispiel sind vier Ausgangsschnittstellen definiert. Die Spalte SIG-EXP bezeichnet sogenannte Erwartungswerte. Diese Erwartungswerte sind durch einen Anwender vorgegeben. Sofern der betrachtete Funktionsbaustein wie erwartet funktioniert, sollte bei der Belegung der Eingangsschnittstellen mit den Werten aus der Spalte SIG-IN eine Ausführung des Funktionsbausteins die erwarteten Werte der Spalte SIG-EXP ("Signal-Expected") ergeben.

Die Spalte SIG-CAL ist Platzhalter für die Resultate der Programmausführung. Zu Beginn eines Programmteil- bzw. Funktionsbausteins-Tests ist diese Spalte nicht mit Werten gefüllt. Während oder nach der Ausführung des Programmbausteins durch die Prüfeinrichtung PE füllt die Prüfeinrichtung PE die Datenfelder der Spalte SIG-CAL mit den tatsächlichen Resultaten der Variablen, Werte und Ausgangsschnittstellen auf. In der Figur 7 ist dieser Zustand bereits dargestellt; es ist zu sehen, dass in den Zeilen 1, 3 und 4 der Resultate durchaus Abweichungen zwischen dem tatsächlichen und dem erwarteten Berechnungsergebnis vorliegen. Sofern die Prüfeinrichtung im vorliegenden Ausführungsbeispiel der Figur 7 gemäß einer Anordnung nach Figur 2 für die Freigabe bzw. Sperrung eines zu ersetzenden Funktionsbausteins einer sich im Betrieb befindlichen Automatisierungseinrichtung AE eingesetzt wäre, würde diese im vorliegenden Ausführungsbeispiel die Verwendung des geprüften Funktionsbausteins nicht freigeben, weil dessen Fehlerhaftigkeit erwiesen ist.

## Patentansprüche

1. Prüfeinrichtung (PE) für einen Programmteil einer industriellen Automatisierungsanordnung (AE),
**dadurch gekennzeichnet,**
**dass** die Prüfeinrichtung (PE) eine Logik zur Berechnung eines durch den Programmteil definierten Programmcodes aufweist,
wobei die Prüfeinrichtung (PE) zur Bereitstellung von in dem Programmteil verwendeten Startwerten und/oder zur Simulation von in dem Programmteil verwendeten Eingangsschnittstellen (E1, E2, E3) eingerichtet ist, und wobei die Prüfeinrichtung (PE) zur Auswertung von durch den Programmteil bei der Ausführung errechneten Werte und/oder Ausgangsschnittstellen (A) ausgebildet ist.

2. Prüfeinrichtung (PE) nach Patentanspruch 1,
**dadurch gekennzeichnet,**
**dass** die Auswertung eine Visualisierung zumindest eines Teils der errechneten Werte und/oder zumindest eines Teils der Zustände der von dem Programmteil betroffenen Ausgangsschnittstellen (A) umfasst.

3. Prüfeinrichtung (PE) nach einem der vorhergehenden Patentansprüchen,
**dadurch gekennzeichnet,**
**dass** Vorgaben für die Startwerte und/oder für die zu Beginn der Prüfung zu simulierenden Zustände der Eingangsschnittstellen (E1, E2, E3) durch einen Benutzer einstellbar sind.

4. Prüfeinrichtung (PE) nach einem der vorhergehenden Patentansprüche,
**dadurch gekennzeichnet,**
**dass** Vorgaben für die Startwerte und/oder für die zu Beginn der Prüfung zu simulierenden Zustände der Eingangsschnittstellen (E1, E2, E3) in den Fällen, in denen keine anderen Startwerte und/oder Zustände für den Eingangsschnittstellen (E1, E2, E3) vorliegen, durch Standardbedingungen definiert sind.

5. Prüfeinrichtung (PE) nach einem der vorhergehenden Patentansprüche,
**dadurch gekennzeichnet,**
**dass** Vorgaben für die Startwerte und/oder für die Zustände der simulierten Eingangsschnittstellen (E1, E2, E3) durch eine Datei für die Prüfeinrichtung (PE) bereitstellbar sind.

6. Prüfeinrichtung (PE) nach Patentanspruch 5,
**dadurch gekennzeichnet,**
**dass** die Datei Erwartungswerte für errechnete Werte und/oder Zustände der Ausgangsschnittstellen (A)umfasst.

7. Prüfeinrichtung (PE) nach Patentanspruch 6,
**dadurch gekennzeichnet,**
**dass** die Prüfeinrichtung (PE) für einen automatischen Vergleich zuwischen den errechneten Werten bzw. Zustände der Ausgangsschnittstellen (A)mit den Erwartungswerten bzw. erwarteten Zuständen der Ausgangsschnittstellen (A)eingerichtet ist.

8. Prüfeinrichtung (PE) nach einem der vorhergehenden Patentansprüche,
**dadurch gekennzeichnet,**
**dass** die Prüfeinrichtung (PE) in eine zu programmierende industrielle Automatisierungsanordnung (AE)integriert ist, wobei die Prüfeinrichtung zur Freigabe oder Sperrung eines geänderten Programmteils für ein bestehendes Programm der Automatisierungseinrichtung (AE) vorgesehen ist.

9. Prüfeinrichtung (PE) nach Patentanspruch 8,
sofern rückbezogen auf Patentanspruch 7,
**dadurch gekennzeichnet,**
**dass** der geänderte Programmteil in den Fällen eines positiven Vergleichs zum Ersatz eines bestehenden Programmteils freigegeben ist, und in allen anderen Fällen die Verwendung dessen gesperrt ist.

10. Prüfeinrichtung (PE) nach einem der vorhergehenden Patentansprüche,
**dadurch gekennzeichnet,**
**dass** die Prüfeinrichtung (PE) zu einer automatischen wiederholten Ausführung oder Berechnung des Programmteils eingerichtet ist, wobei zwischen zwei Ausführungen zumindest ein Startwert und/oder ein Zustand einer simulierten Eingangsschnittstelle (E1, E2, E3) mittels einer Zufallseinrichtung änderbar ist.

11. Prüfeinrichtung (PE) nach einem der vorhergehenden Patentansprüche,
**dadurch gekennzeichnet,**
**dass** die Prüfeinrichtung (PE) ein Scripting-Interface zur Programmierung eines Prüfablaufs mittels einer Beschreibungssprache aufweist.

12. Prüfeinrichtung (PE) nach einem der vorhergehenden Patentansprüche,
**dadurch gekennzeichnet,**
**dass** der Programmteil ein Funktionsbaustein (FB) eines Betriebsprogramms einer industriellen Automatisierungskomponente ist oder einen solchen Funktionsbaustein (FB) umfasst.

13. Prüfeinrichtung (PE) nach einem der vorhergehenden Patentansprüche,
**dadurch gekennzeichnet,**
**dass** zur Berechnung oder Simulation des Programmteils eine Beschreibung des logischen Verhaltens des Programmteils oder zumindest eines darin enthaltenen Elementes in einer Beschreibungssprache verwendbar ist.
